# EUROPEAN PATENT SPECIFICATION

(11) **EP 2 678 158 B1**
(45) Date of publication and mention of the grant of the patent: **16.01.2019**
(21) Application number: 12749733.7
(22) Date of filing: 23.02.2012
(51) Int. Cl.: B32B 27/10

(54) **UNIDIRECTIONAL ORIENTED POLYETHYLENE-BASED HEAT SHRINKABLE POLYMERIC LABEL**
WÄRMESCHRUMPFBARES POLYMERETIKETT AUF BASIS VON UNIDIREKTIONAL AUSGERICHTETEM POLYETHYLEN
ETIQUETTE POLYMÈRE THERMORÉTRACTABLE À BASE DE POLYÉTHYLÈNE À ORIENTATION UNIDIRECTIONNELLE

(30) Priority: 23.02.2011 US 201161445803 P; 03.06.2011 US 201161492957 P
(43) Date of publication of application: 01.01.2014
(60) Divisional application: 17207055.9
(73) Proprietor: CCL Label, Inc., Framingham, MA 01701 (US)
(72) Inventor: McKILLIP, Barron, G., Mickleton, NJ 08056 (US); HOSTETTER, Barry, Landenberg, PA 19350 (US); WIEGAND, Edward, Philadelphia, PA 19114 (US); WEYERMANN, Ulrich, E., Bethany Beach, DE 19930 (US); MARTIN, William, J., Woolwich Township, NJ 08085 (US)
(74) Representative: Eisenführ Speiser
(86) International application number: PCT/US2012/026271
(87) International publication number: WO 2012/116149

(56) References cited:
- EP-A1- 0 204 843
- US-A- 5 691 043
- US-A1- 2004 126 518
- US-A1- 2009 220 757
- US-A1- 2011 039 151
- US-B1- 6 303 233

## Description

### Introduction

This patent application claims the benefit of priority from U.S. Provisional Application Serial Number 61/445,803 filed February 23, 2011 and from U.S. Provisional Application Serial Number 61/492,957 filed June 3, 2011.

### Background of the Invention

Unidirectional heat shrinkable films have been used to label and decorate containers and items based on transverse direction or machine direction shrinkage. Transverse direction shrink films are typically converted to sleeves prior to application to the container or item to be labeled. Machine direction shrink films are applied by a roll fed method or in certain applications as a pressure-sensitive label. Such heat shrinkable films have been produced from polyvinyl chloride (PVC) and polystyrene (OPS) for applications related to pressure-sensitive labels for cylindrical dry cell batteries. Other heat shrinkable films based on polyethylene terephthalate glycol modified (PETG) and polypropylene (PP) have also been mentioned as potential candidates. Labels may be designed as a single ply or a lamination of two or more films. Unidirectional orientation techniques are disclosed in U.S. Patent No. 6,436,496. Unidirectional-oriented polyvinyl chloride, polyvinyl fluoride, vinylidine fluoride, and polypropylene films for use as dry cell battery labels are disclosed in U.S. Pat. No. 5,747,192.

Oriented films are an important class of industrial products useful in the wrapping or packaging of various articles of commerce. Oriented isotactic polypropylene film is known to be useful for its high barrier properties, clarity and stiffness. Polypropylene polymers used for oriented films are typically isotactic homopolymers, or blends of isotactic polypropylene polymers with differing melt flow rates (MFR) or tacticity indices, or blends of isotactic polypropylene with atatic polypropylene, syndiotactic polypropylene, random polypropylene copolymers having minor amounts of ethylene or higher alphaolefins, and ethylene copolymers. See, for example, U.S. Patent Nos. 4,950,720 and 5,691,043. As disclosed in U.S. Patent No. 4,921,749, other components such as petroleum resins may be added to modify properties such as heat-sealing performance, gas permeability and stiffness. Such oriented polypropylene, including biaxially oriented polypropylene (BOPP) films, have many desirable properties for use in the packaging and labeling of products. U.S. Patent No. 6,436,496 discloses heat shrinkable films which may have a core layer with up to 55 wt. % of a polyolefin material with the balance being an ethylene-propylene copolymer.

Heat shrinkable films are further described in U.S. Patent Nos. 4,194,039; 3,808,304; 4,188,350; 4,194,039; 4,377,616; 4,390,385; 4,448,792; 4,582,752; and 4,963,418. The manufacture of polypropylene heat shrinkable films using modifiers in a polypropylene-based shrink layer to make films suitable for packaging, labeling, and other applications is disclosed in U.S. Patent Nos. 5,691,043; 5,888,640; 6,303,233; 6,322,883 and 6,908,687.

In the prior art, roll-fed MD (machine direction) heat shrinkable polyolefin films exhibit shrinkage of about 25% at 135°C. The films often have poor storage stability exhibiting considerable shrinkage when stored at temperatures of 60°C or higher. For example, U.S. Patent No. 5,747,192 indicates that conventional films typically retain less than 95% of their shrinkage after high temperature storage. Conventional films may also have poor seam integrity when used in conjunction with hot melt adhesives in label applications.

Compared to PVC, OPS and PETG heat shrinkable films, polyolefin-based heat shrinkable films are preferred due to their inherent lower density and higher yield at equivalent thickness. Moreover, several concerns with existing technologies are related to the environmental concerns with disposal and recycling of PVC-based labels. Polypropylene-based machine direction heat shrinkable films have been prepared by machine direction uniaxal orientation of cast and biaxially oriented films. Machine direction uniaxal oriented cast polypropylene films have been characterized as having unbalanced tensile properties, poor film flatness, high shrinkage forces, high shrink temperatures and maximum shrinkage of 40 percent. Machine direction uniaxal-oriented, biaxially-oriented polypropylene films have been characterized as having high shrinkage forces, high shrink temperatures and maximum shrinkage of 40 percent. Accordingly, there is a need in the art for improved heat shrinkable films.

### Summary of the Invention

The present invention is an unidirectional-oriented polyethylene-based heat shrinkable label according to claim 1.

A consumer product such as container, bottle, tube or battery containing the label is provided as is a method for labeling a consumer product.

### Brief Description of the Drawing

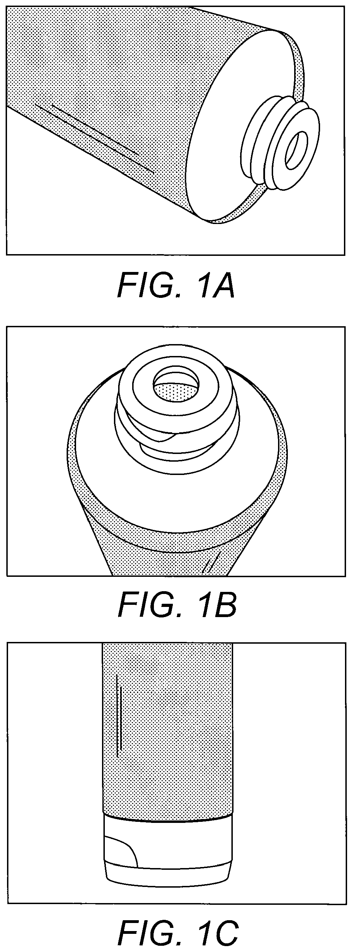

Figure 1 shows a heat shrinkable pressure-sensitive label applied over the edge of a tube where the body and the shoulder of the head meet (Figure 1A) such that, upon heat treatment, the label shrinks against the head (Figure 1B) and completely covering the tube body (Figure 1C).

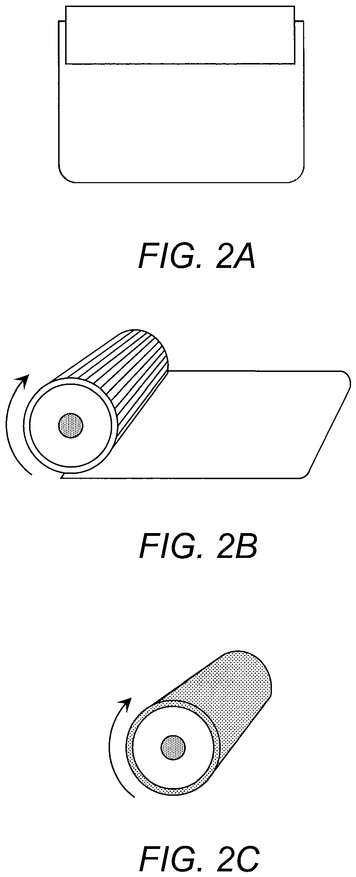

Figure 2 shows a heat shrinkable pressure-sensitive label applied over the edge of a dry cell battery. As illustrated, the label is cut to a length that is longer than the length of the battery (Figure 2A), the label is applied to the battery (Figure 2B) and, upon heat treatment, the label shrinks against the shoulder of the battery and covers a portion of the top and bottom ends of the battery (Figure 2C).

### Detailed Description of the Invention

The present invention is a printed and cut label produced from an unidirectional-oriented polyethylene-based heat shrinkable polymeric film. The instant label can be combined with a pressure-sensitive adhesive and used to label various consumer products. The instant label has several advantages over labels of the prior art. In particular, the instant label is produced with a biaxial-oriented and subsequently uniaxial machine direction-oriented polyethylene heat shrink film thereby providing the ability to use thinner films and produce labels with balanced tensile properties. The instant label exhibits exemplary shrink performance, with machine direction shrinkage of 20% to 75%. Moreover, the instant label exhibits low residual shrink force/shear force, having machine direction shrinkage of less than 5% below 80°C. In addition, given that the instant label exhibits a transverse direction shrinkage of less than 5%, the instant label is stable during manufacture, shipping, and storage. Machine direction tensile properties and flex stiffness are enhanced by the machine direction uniaxial orientation process thereby providing the instant label to exhibit good processability during label manufacture, label dispensing and end use. Moreover, because the instant label is an all-polyethylene label, the label is environmentally friendly and sustainable.

As used herein, the term "oriented" refers to a thermoplastic web which forms a film structure in which the web has been elongated in either one direction ("uniaxial") or two directions ("biaxial") at elevated temperatures followed by being "set" in the elongated configuration by cooling the material while substantially retaining the elongated dimensions. This combination of elongation at elevated temperatures followed by cooling causes an alignment of the polymer chains to a more parallel configuration, thereby improving the mechanical properties of the polymer web. Upon subsequently heating of certain unrestrained, unannealed, oriented sheet of polymer to its orientation temperature, heat shrinkage may be produced. In accordance with the present invention, the film of the instant label is biaxial-oriented and subsequently uniaxial machine direction-oriented.

The machine direction uniaxial orientation process is known in the art. The film is drawn by a pull roll, threaded through a machine direction orientation, which is composed of one or more pre-heated rolls, one or more stretching stages with an annealing roll after one or more stretching stages, a conditioning and annealing roll, and a chill roll. All rolls are individually driven and temperature controlled. Stretching is done by inducing a speed differential between two adjacent rolls in the stretching stages, wherein the maximum stretching ratio is dictated by the material. The stretching or orientation ratio is defined as the ratio of the speed of the second roll in the stretching stage divided by the speed of the first roll in the stretching stage. Machine direction orientation results when the stretching ratio is greater than one. The level of machine direction and transverse direction shrinkage is a result of the stretching ratio with higher stretching ratios resulting in higher machine direction shrinkage. Annealing after stretching is minimized and preferably at a temperature below 100°C to maintain the machine direction shrinkage properties above 80°C. Machine direction shrinkage properties are a result of material selection and biaxial orientation and uniaxial orientation process conditions.

A unidirectional heat shrinkable label is defined herein as a label having shrinkage greater than 20%, 25%, 30%, 35%, 40%, or most preferably greater than 45% in the shrink direction (*i.e.,* machine direction). In certain embodiments, shrinkage of the instant label is ≤75% at ≤10°C the melting point of the film. In other embodiments, shrinkage of the instant label is 20% to 75% in the machine direction at ≤10° the melting point of the film. Furthermore, shrinkage in the transverse direction is less than 10% and preferably less than 5% at temperatures below the melting temperature of the film. In particular, shrinkage does not occur at the use or distribution temperatures of a product containing the instant label and is only invoked upon exposure to temperatures above the use or distribution temperature range during the label application process. In this respect, particular embodiments of the instant label feature shrinkage beginning at greater than 80°C. The percentage of shrink can be measured according to conventional methods including, e.g., ASTM D1204.

In certain embodiments, machine direction shrinkage of the instant label is greater than 40% between 100°C and 135°C and less than 5% in the traverse direction. Moreover, machine direction shrinkage is less than 5% up to 80°C and traverse direction shrinkage is less than 5% up to 135°C.

The unidirectional-oriented heat shrinkable label of the present invention is composed of a primary polymeric component, which is a polyethylene. In certain embodiments, the polyethylene is composed of at least one polyethylene homopolymer, copolymers of polyethylene, blends of homopolymers or copolymers thereof that may be used in isolation as the primary polymeric component or combined with other polymeric materials or additive components to form the primary polymeric component. Exemplary polyethylene polymers of use in the instant label include High Density Polyethylene (HDPE; density greater than 0.941 g/cm³; melting temperature 126-135°C), Medium Density Polyethylene (MDPE; density between 0.926 and 0.940 g/cm³; melting temperature 120-125°C), Low Density Polyethylene (LDPE; density between 0.910 and 0.925 g/cm³; melting temperature 105-118°C), Linear-Low Density Polyethylene (LLDPE; density between 0.919 and 0.925 g/cm³; melting temperature 126°C), Ultra Low Density Polyethylene (ULDPE) or Very Low Density Polyethylene (VLDPE; density between 0.885 and 0.915 g/cm³), High Molecular Weight HDPE (HMW-HDPE; density in the range of 0.935 and 0.955 g/cm³) and analogues with bimodal and multimodal molecular weight distribution (see U.S. 6,613,841 and US 8,034,461) or blends of homopolymers or copolymers thereof. In certain embodiments, blends of polyethylene homopolymers or copolymers contain >50% ethylene. In one embodiment, the polyethylene of the instant label contains at least one polyethylene. In another embodiment, the polyethylene of the instant label consists of a polyethylene, or a blend of polyethylene homopolymers or polyethylene copolymers. The primary polymeric component or polyethylene is preferably from about 50 wt. % to about 100 wt. % of the unidirectional-oriented heat shrinkable polymeric film used in the production of the instant label.

In some embodiments, blends of HMW-HDPE and LLDPE are provided wherein the blend ratio is between 80/20 to 20/80, and melting index (190°C) between 0.01 and 0.05 dg/minute (see U.S. 6,613,841).

In other embodiments, the instant label is produced with a HMW-HDPE with a density between 0.935 and 0.948 g/cm³ and melting index (190°C, ASTM 1238) between 0.03 and 0.15 dg/minute (see US 7,011,892).

Blends of HDPE, MDPE, LLDPE, VLDPE including bimodal and multimodal molecular weight distribution are embraced by the present invention (see US 8,034,461). In some embodiments, the instant label contains greater than 50 wt. % HDPE or MDPE. In other embodiments, the instant label contains bimodal or multimodal HDPE. In yet other embodiments, the instant label contains 0% LDPE.

In addition to the polyethylene component, the labels of the present invention can also include an additive to improve or alter processing properties, shrinkage properties, tensile properties and optical properties. Certain additives can also be used to enhance the ability to unidirectional orient the film and result in acceptable shrinkage properties. Examples of additives include antioxidants, stabilizers, colorants, dispersing aids. Additives may also be utilized to impart additional functional properties such as coefficient of friction (COF) control, anti-block, or opacity. To aid in the machine direction uniaxial orientation process, particular embodiments feature the use of low molecular weight polyethylene (e.g., density 0.950 g/cm³, molecular weight 2654-5994 g/mol), olefin waxes, or very low density LLDPE as additives to the instant label. In certain embodiments, the additive is less than 50 wt. % of film composition. In other embodiments, the additive is about 1 wt. % to about 40 wt. % of the film used in the production of the instant label. While some embodiments feature the inclusion of an additive into the film used in the production of the instant label, other embodiments feature the use of an additive in a coating or vanish.

The polyethylene-based heat shrinkable label of the invention can be composed of a single component or monolayer film. In other embodiments, the polyethylene-based heat shrinkable label is composed of a multilayered film containing two or more distinct layers of similar or of different compositions.

Multilayered labels of the invention can include a varnish layer to provide a protective or functional coating; a transparent film outer layer; a reverse-printed transparent film outer layer; a surface-printed transparent film, opaque or metalized inside film layer; a non-shrink film layer; a pressure-sensitive adhesive layer; or a release film liner. Suitable outer layer films for the instant multilayered labels can be composed of machine direction heat shrink polyethylene-based films or non-shrink poylethylene or polypropylene-based films. Non-shrink films can be composed of a polyethylene or polypropylene. The non-shrink polyethylene or polypropylene film may be composed of homopolymers, copolymers or blends of polyethylene or polypropylene homopolymers and copolymers. When the instant label is multilayered, preferably the label is a laminate, wherein one or more of the films of the laminate are unidirectional heat shrinkable films, and wherein the laminate includes a transparent outer film layer. In some embodiments, the label of the invention is a laminate composed of at least two layers, wherein at least one of the laminate film layers is a polyethylene-based unidirectional heat shrinkable film. In particular embodiments, the label of the invention is a laminate composed of two film layers wherein both film layers are polyethylene-based unidirectional heat shrinkable films. In further embodiments, the label of the invention is a laminate, wherein at least one of the films of the laminate is characterized as a polyethylene-based unidirectional heat shrinkable film and the laminate film includes a non-shrink film layer which is biaxial oriented polyethylene-based or biaxial oriented polypropylene-based. When the label of the invention is a lamination of more than one film, desirably the films of the laminate are combined by use of a permanent adhesive.

Labels of the invention can be produced with a polyethylene unidirectional heat shrinkable film, and optionally a non-shrink film, with film thicknesses of between 10 microns to 200 microns. Wherein the label of the invention is produced from a laminate of a shrink and non-shrink film, the thickness of the shrink film is preferably greater than 50% of the total label thickness. Desirably the overall thickness of the instant label is between 12,7 µm (0,5 mil)to 254 µm (10 mil).

In accordance with the instant method, the film of the instant label is produced by obtaining resins of the polyethylene of interest, extruding the polyethylene layer, biaxially orienting the extruded polyethylene layer; and subsequently uniaxial machine direction orienting the biaxially-oriented polyethylene layer to form a machine direction unidirectional-oriented polyethylene-based heat shrinkable polymeric film. In certain embodiments, the machine direction orientation ratio is greater than 4/1. In other embodiments, the machine direction orientation ratio is less than 13/1. In particular embodiments, the machine direction orientation ratio is between 5/1 to 10/1. The machine direction film shrinkage is a result of the machine direction orientation ratio, where the annealing and stress relaxation is minimized and is at or below 100°C, preferably below 80-90°C. Advantageously, a label produced by the instant method has exceptional shrinkage, tensile properties and stiffness.

A label of the invention can be composed of a single film layer or multiple film layers. Multilayer films can be produced by coextrusion, extrusion coating or coating. When the instant label is composed of more than one layer, the label can have between one and five layers although any number of layers is possible, including even numbers of film component layers. Moreover, the surface of the label may be treated with corona or flame or coated to increase surface functionality and surface tension.

The label of this invention has superior optical properties and, when composed of a transparent film, has a haze value of less than 10, or more particularly less than 6. Furthermore, the label of the present invention exhibits enhanced storage stability characteristics with shrink levels of less than 5% in the machine direction at or below 60°C, preferably at or below 70°C or most preferably at or below 80°C. In some embodiments, the label exhibits less than 5% shrinkage in the machine direction at these temperatures.

Given its use in labeling articles of consumer products, the instant label is produced in roll form and printed with product information, e.g., with graphics, images, text, coloration or other indicia over part or all of the surface of one or more of the films utilized in the label, and cut to the final label dimensions prior to application on the consumer product. In addition to product information, the instant label may be transparent, white, opaque, metalized or contain special enhancements such as embossing. Graphics, coloration, images or text can be reverse-printed or surface-printed. In some embodiments, when the label is multilayered, the graphics, coloration, images or text are reverse-printed on a transparent outer layer or surface printed on a transparent, opaque or metalized inside layer.

According to certain embodiments, the invention features a label produced from a single ply polyethylene unidirectional heat shrinkable film, wherein the film is reverse-printed or surface-printed with an optional protective coating or varnish covering the print.

In other embodiments, the invention features a label produced from a polyethylene unidirectional heat shrinkable film as a laminate, wherein one or more of the films of the laminate are unidirectional heat shrinkable films, and wherein the laminate includes a transparent film as the outer layer.

In yet other embodiments, the invention is a label produced from a polyethylene unidirectional heat shrinkable film, wherein the label is either a single ply film or a lamination of two films, and wherein the backside (inside) of the film is coated (100% coverage) with a pressure-sensitive adhesive. In certain embodiments, the adhesive has a high temperature shear strength of up to 71,1°C (160°F). In accordance with this embodiment, the label can further include a film-based release liner.

When applied to a consumer product, the backside (inside) of the label is coated (100% coverage) with a pressure-sensitive adhesive. The pressure-sensitive adhesive is applied after the label is printed with graphics or other indicia. The pressure-sensitive adhesive-coated label can then be laminated to a silicone-coated or similar release film (liner) or release substrate and subsequently die cut to the desired label dimension. Alternatively, in the case of a lamination structure, the pressure-sensitive adhesive and release liner can be laminated to a base film, which subsequently can be surface printed or alternately laminated to a reverse-printed transparent outside film, and die cut to the desired label dimension.

Pressure-sensitive adhesives of use in the instant invention include, but are not limited to, rubbery adhesive agents, vinyl acetate adhesive agents, ethylene-vinyl acetate adhesive agents, polyvinyl alcohol adhesive agents, polyvinyl acetal adhesive agents, vinyl chloride adhesive agents, acrylic adhesive agents, polyamide adhesive agents, polyethylene adhesive agents, cellulose adhesive agents, polysulfide adhesive agents and hot-melt type high-polymer-containing adhesives. A pressure-sensitive adhesive of the invention is pressure-sensitive in nature and is also characterized as being permanent once the label is applied, as having an adhesive shear strength of greater than 15,75 kg/m (400 g/in), and is stable up to 70°C. In other embodiments, the adhesive has a high temperature shear strength of up to 160°F (71°C). A resultant pressure-sensitive adhesive applied label maintains good overlap seam integrity and no dog ears or label lift on the ends.

The label of the present invention is useful to package and label a variety of products. The label of the invention exhibits a high degree of shrinkage in a very controlled and consistent manner while providing a number of other positive characteristics such as optical clarity, superior handling characteristics, exceptional tensile properties, stiffness and storage stability. Moreover, to decrease the environmental impact of the instant label, desirably, the label of the invention contains greater than 10% or greater than 20% polyethylene recycle content. In particular embodiments, the recycle content of the instant label is in the range of 10 to 90%.

As indicated, the label is of use in labeling, covering and/or decorating a variety of consumer products. The label may be used in a variety of labeling processes including roll fed, sleeve and pressure-sensitive labeling.

A consumer product wrapped in a label of the invention is also provided. Consumer products include, containers; bottles; tubes, e.g., flexible plastic tubes; or batteries, e.g., cylindrical dry cell batteries, wherein the label forms at least a 360° full wrap around the circumference of the container, bottle, tube or battery.

The shrink label of the invention is useful in tightly covering non-uniform contours of a product and also may extend beyond the height of the product and upon heat shrinkage forming a tight wrap and label to the surface of the product and top and/or bottom surfaces.

Labels are produced, slit into a roll with a single lane of labels and applied with the appropriate labeling equipment to a consumer product, wherein the circumference of the consumer product is fully wrapped to at least 360 degrees and is subsequently shrunk tightly to the consumer product with the application of hot air or steam heat. The instant shrink label is particularly useful for application to non-uniform or contoured consumer products where the label as applied is tightly wrapped to the largest diameter of the container and is then, with the application of hot air or steam, shrunk tightly to the smaller diameter and contour areas of the consumer product. The label may also be applied to extend over the top and/or bottom ends of the consumer product and shrunk tightly around the radius and top and/or bottom of the product.

More specifically, when applied to a container, the height of the label may extend beyond the ends of the container or may be equal to the height of the container or cover a part of the height of the container. The label is subsequently heat shrunk to the container so that the label creates a tight and uniform fit to the surface of the container with top and bottom ends encased by the label.

In some embodiments, such as use of a pressure-sensitive label, the label has a release liner, which is removed prior to application to the container or battery. Desirably, the label length is more than a full wrap around the consumer product. Accordingly, in particular embodiments, the label covers and/or decorates a cylindrical consumer product and forms at least a 360° full wrap, or more preferably greater than a 360° full wrap and extends beyond the ends of the cylindrical consumer product. For example, when applied to a battery, the label height in the transverse direction is designed to be higher than the dimension of the battery so as to extend over the ends of the battery. When using the instant label to fully wrap a side-seamed plastic tube, weak seam and crimping area issues associated with the side seam tube are eliminated thereby allowing for 100% decoration of the tube and elimination of the non-decorated stripe conventionally present on extruded tubes. To achieve this, a heat shrinkable pressure-sensitive label is cut to a length that is longer than the tube and applied to the tube so that the label extends beyond the edge of the tube where the body and the shoulder of the head meet (Figure 1A). In a second step, the label is exposed to heat thereby causing the label to shrink over the shoulder and completely cover the tube body (Figure 1B). Once the cap is attached, the tube is completely covered by the label eliminating any undecorated stripe between the tube and cap (Figure 1C).

In a similar manner, a labeled battery is prepared by cutting the label to a length that is longer than the length of the battery (Figure 2A), the label is adhered to the battery (Figure 2B) and the label is heat shrunk to the battery so that a portion of the top and bottom ends of the battery are encased by the label (Figure 2C)

The invention is described in greater detail by the following non-limiting examples.

### Example 1: Shrinkage of a Single Layer

Table 1 provides the percent shrinkage of a non-shrink biaxial orientation polyethylene-based monolayer label (Sample #1, 110 gauge) compared to polyethylene-based unidirectional-oriented polyethylene-based heat shrinkable monolayer label produced by biaxial orientation followed by uniaxial machine direction orientation (Sample #2, 75 gauge; #3, 110 gauge; #4, 150 gauge; #5, 175 gauge; and #6, 200 gauge).

**TABLE 1**

| Temperature (°C) | Direction | Sample Shrinkage | | | | | |
|---|---|---|---|---|---|---|---|
| | | #1 | #2 | #3 | #4 | #5 | #6 |
| 70 | Machine | 0 | 3.5 | 2.5 | 1.5 | 1 | 0 |
| | Traverse | -0.5 | -1 | 0 | 1 | 0 | 0 |
| 80 | Machine | 0.5 | 5.5 | 5 | 3 | 2.5 | 2 |
| | Traverse | -0.5 | -1 | 0 | -0.5 | 0 | 0.5 |
| 90 | Machine | 1 | 9 | 9 | 5.5 | 6 | 5 |
| | Traverse | 0 | -1 | 0 | 0 | -0.5 | -1 |
| 100 | Machine | 1.5 | 14 | 14 | 9 | 9 | 6 |
| | Traverse | -0.5 | -1.5 | -1 | -1 | -1 | -1 |
| 120 | Machine | 2 | 76 | 75 | 55 | 71 | 28 |
| | Traverse | -1 | -4 | -4 | -3 | -5 | -4 |
| 130 | Machine | 6 | 83 | 82 | 85 | 84 | 82 |
| | Traverse | -4 | -3 | -4 | -4 | -5 | -6 |

### Example 2: Shrinkage of a Laminate

Table 2 provides label shrinkage of a two-film lamination label. Samples #7-#9 are a lamination of two films where both films are polyethylene-based unidirectional-oriented polyethylene-based heat shrinkable films produced by biaxial orientation followed by machine direction orientation. Samples #10-#11 are a lamination of two films where the outside film is a polyethylene-based unidirectional-oriented polyethylene-based heat shrinkable film produced by biaxial orientation followed by machine direction orientation and the inside film is a non-shrink biaxial orientation polyethylene-based film. Films used in the labels are selected from the films listed in Table 1. Specifically Sample #7 is a lamination of #3 (100 gauge) and #2 (75 gauge); Sample #8 is a lamination of two #2 films (each 75 gauge); Sample #9 is a lamination of #4 (150 gauge) and #2 (75 gauge); Sample #10 is a lamination of #3 (100 gauge) and #1 (110 gauge); and Sample #11 is a lamination of #6 (200 gauge) and #1 (110 gauge).

**TABLE 2**

| Temperature (°C) | Direction | Sample Shrinkage | | | | |
|---|---|---|---|---|---|---|
| | | #7 | #8 | #9 | #10 | #11 |
| 70 | Machine | 3 | 1 | 2 | 1.5 | 0.5 |
| | Traverse | -1 | -0.5 | -0.5 | 0 | -1 |
| 80 | Machine | 5 | 5 | 4 | 0.5 | 1 |
| | Traverse | -1 | -1 | -1 | 2 | -1 |
| 90 | Machine | 8 | 7 | 6 | 3 | 1 |
| | Traverse | -2 | -1 | -1 | -1 | -1 |
| 100 | Machine | 18 | 13 | 14 | 8 | 3 |
| | Traverse | -2 | -2 | -2 | -1 | -1 |
| 120 | Machine | 50 | 48 | 66 | 62 | 22 |
| | Traverse | -5 | -4 | -0.5 | -4 | -2 |
| 130 | Machine | 79 | 75 | 78 | 74 | 70 |
| | Traverse | 1 | -6 | -7 | -2 | -4 |

### Example 3: Properties of Single and Multilayer Labels

Table 3 provides the tensile and optical properties of a non-shrink biaxial orientation polyethylene-based film (#1, 110 gauge) and polyethylene-based unidirectional-oriented heat shrinkable films produced by biaxial orientation followed by uniaxial machine direction orientation (#2, 75 gauge; #3, 110 gauge; #4, 150 gauge; #5, 175 gauge; #6, 200 gauge) and of two-film lamination labels. Lamination Samples #7-#9 where composed of two films, each being a polyethylene-based unidirectional-oriented polyethylene-based heat shrinkable film produced by biaxial orientation followed by machine direction orientation (#7, 110 gauge + 75 gauge; #8, 200 gauge + 75 gauge; #9, two 75 gauge films). Lamination Samples #10-#11 were composed of two films where the outside film was a polyethylene-based unidirectional-oriented heat shrinkable film produced by biaxial orientation followed by machine direction orientation and the inside film was a non-shrink biaxial orientation polyethylene-based film (#10, 110 gauge PE MDS + 110 PE; #11, 200 gauge PE MDS + 110 PE). Tensile modulus for Sample #1-#6 was at 5% elongation and for Sample #7-#11 was at 2% elongation.

**TABLE 3**

| Sample # | Tensile Modulus MD x 6894,76 Pa (psi) | Tensile Modulus TD x 6894,76 Pa (psi) | Flex Stiffness MD | Flex Stiffness TD | Haze |
|---|---|---|---|---|---|
| 1 | 60,000 | 85,000 | 6 | 8 | 11 |
| 2 | 198,700 | 173,000 | 2.5 | 2.5 | 4.9 |
| 3 | 165,000 | 170,000 | 5 | 5 | 10 |
| 4 | 175,000 | 165,000 | 6 | 7 | 10 |
| 5 | 99,640 | 111,100 | | | 7 |
| 6 | 200,000 | 165,000 | 8.8 | 8.8 | 6.8 |
| 7 | 78,280 | 82,180 | 8 | 10 | |
| 8 | 136,270 | 102,980 | 21 | 16 | |
| 9 | 103,585 | 111,755 | 3.3 | 8.7 | |
| 10 | 63,835 | 68,955 | 7 | 11 | |
| 325 | 68,455 | 74,580 | 12 | 17 | |

| | | | | | |
|---|---|---|---|---|---|
| MD, machine direction; TD, traverse direction. | | | | | |

### Example 4: Competitive Shrinkage

Table 4 provides the percent machine direction shrinkage of alternative machine direction shrink films. PVC 211/01 is PENTALABEL Rigid Vinyl OM-L211/01; PVC 210/01 is PENTALABEL Rigid Vinyl OM-L210/01; PETG 20/30 is 50.8 µm (2 mil) clear PETG OM-EG20/30; and PETG 20/40 is 50.8 µm (2 mil)clear PETG OM-EG20/40, each from Klockner Pentaplast. PP is a multilayer polypropylene film as described in Example 4 of US 6,908,687.

**TABLE 4**

| Sample | Temperature (°C) | | | | | | | |
|---|---|---|---|---|---|---|---|---|
| | 65 | 70 | 80 | 90 | 100 | 110 | 120 | 130 |
| PVC 211/01 | 0 | 2 | 25 | 50 | | | | |
| PVC 210/01 | 0 | 2 | 10 | 32 | | | | |
| PETG 20/30 | 10 | 30 | 48 | 53 | | | | |
| PETG 20/40 | 0 | 38 | 55 | 62 | | | | |
| PP | | 1.95 | 3.5 | 6.25 | 11.3 | 21.9 | 32.8 | 36.7 |

### Example 5: Method for Labeling a Fully Extruded Tube with a Snap Cap

The following describes two alternative methods for labeling a fully extruded tube with a snap cap.

*Method 1.* An extruded body tube sleeve is produced using mono or multilayer coextrusion process and the sleeve is cut to the desired length. The head is affixed to the tube body by compression molding or other means. Subsequently, the surface energy of tube body and conical head of tube is increased (e.g., by corona or flame treatment) to accept label adhesive most effectively. The label is applied with the edge of label overlapping but not yet adhered to the conical section of head. Heated air or radiant heat is then applied to the portion of the label overlapping the conical head to induce label shrinkage. Adherence of the label to the conical head is facilitated by a soft roller, pressing ring conforming to the shape of the head or other means to intimately bond the adhesive to the head. As an optional step, the tube and/or closure is rotated to a position suitable to orient a closure to the front panel graphics on the label of the tube. Subsequently, the cap is applied.

*Method 2.* An extruded body tube sleeve is produced using mono or multilayer coextrusion and the sleeve is cut to the desired length. Subsequently, the surface energy of tube body is increased to accept label adhesive most effectively. The sleeve is then positioned accurately on a mandrel with respect to the location of the label edge to be dispensed onto the sleeve. The label is applied to the tube sleeve with the edge of the label even with the end of the tube sleeve. An injection molded head is then welded to the tube sleeve containing the label using hot air system known in the art of tube making. The hot air used in the head welding operation will induce label shrinkage as the tube sleeve confirms to the shape of the tube head. As an optional step, the tube is rotated on a mandrel and/or closure to a position suitable to orient a closure to the front panel graphics on the label of the tube. Subsequently, the cap is applied.

### Example 6: Method for Labeling a Fully Extruded Tube with a Screw Cap with Orientation

The method described in Example 2 can be modified to allow oriented screw-on caps by molding lugs into the compression molded head in a consistent location relative to the thread start position. A sensor in the process will then detect this lug and use it as a signal to apply the label relative to the lug and therefore thread start position. When the cap is screwed onto the tube, it will consistently end up in the correct location relative to the label graphics.

## Claims

1. A unidirectional-oriented polyethylene-based heat shrinkable label comprising a biaxial-oriented and subsequently uniaxial machine direction-oriented polyethylene film, wherein said film comprises between 50 wt% and 100 wt% polyethylene, that has a machine direction shrinkage of greater than 40% between 100°C and 135°C and less than 5% in the transverse direction, and machine direction shrinkage is less than 5% up to 80°C and transverse direction shrinkage is less than 5% up to 135°C,
further comprising a pressure-sensitive adhesive that is permanent once the label is applied, has an adhesive shear strength of greater than 15.75 kg/m [400 g/in] and is stable up to 70°C.

2. The label of claim 1, wherein the polyethylene comprises High Density Polyethylene, Medium Density Polyethylene, Low Density Polyethylene, Linear-Low Density Polyethylene, Ultra Low Density Polyethylene or Very Low Density Polyethylene, High Molecular Weight High Density Polyethylene, or blends of homopolymers or copolymers thereof.

3. The label of claims 1 or 2, further comprising one or more additives that improve processing properties, shrinkage properties, tensile properties or optical properties, chosen from antioxidants, stabilizers, colorants, dispersing aids.

4. The label of claims 1 to 3, wherein said label is a monolayer or multilayered.

5. The label of claims 1 to 4, wherein the label is multilayered and comprises a non-shrink film layer.

6. The label of claim 5, wherein the non-shrink film layer comprises polyethylene or polypropylene.

7. The label of claims 1 to 6, wherein the label is multilayered and comprises a transparent outer film layer.

8. The label of claims 1 to 7, further comprising a release liner.

9. The label of claim 1, wherein the label is attached to a consumer product.

10. The label of claim 9, wherein the label is attached to the consumer product and shrunk to the consumer product.

11. The label of claims 9 or 10, wherein the consumer product is a container, bottle, tube, or battery.

12. The label of claim 11, wherein the consumer product is a battery, and the label is heat shrunk to the battery so that the top and bottom ends of the battery are encased by the label.

13. The label of claim 11, wherein the consumer product is a flexible squeeze tube comprising a body and shoulder.

14. The label of claim 13, wherein the label forms a 360° full wrap and wherein the label is heat shrunk to the flexible squeeze tube so that the label extends over the shoulder of the tube.

15. The label of claims 1 to 14, wherein the label is printed and cut to conform to a consumer product.

16. The label of claims 1 to 15, wherein the label is multilayered and one or more films of the label are produced by coextrusion, extrusion coating, or coating.

17. The label of claims 1 to 16, wherein the label is multilayered and includes a varnish layer.

## Patentansprüche

1. Unidirektional gerecktes, polyethylen-basiertes, warmschrumpfbares Etikett, das eine biaxial gereckte und anschließend uniaxial in Maschinenlaufrichtung gereckte Polyethylenfolie enthält, wobei die Folie zwischen 50 Gew.-% und 100 Gew.-% Polyethylen enthält, das zwischen 100 °C und 135 °C eine Schrumpfung von mehr als 40 % in Maschinenlaufrichtung und weniger als 5 % in Querrichtung aufweist, wobei die Schrumpfung bis 80 °C in Maschinenlaufrichtung weniger als 5 % beträgt und die Schrumpfung bis 135 °C in Querrichtung weniger als 5% beträgt,
und das ferner einen druckempfindlichen Klebstoff enthält, der dauerhaft ist, sobald das Etikett angebracht ist, eine Haftscherfestigkeit von mehr als 15,75 kg/m [400 g/in] aufweist und bis 70 °C beständig ist.

2. Etikett nach Anspruch 1, wobei das Polyethylen Polyethylen hoher Dichte, Polyethylen mittlerer Dichte, Polyethylen niedriger Dichte, lineares Polyethylen niedriger Dichte, Polyethylen ultra-niedriger Dichte, Polyethylen sehr geringer Dichte, Polyethylen hoher Dichte und hohen Molekulargewichts, oder Mischungen von Homopolymeren oder Copolymeren davon enthält.

3. Etikett nach Anspruch 1 oder 2, ferner ein oder mehrere Additive enthaltend, die die Verarbeitungseigenschaften, Schrumpfeigenschaften, Zugfestigkeitseigenschaften oder optischen Eigenschaften verbessern, ausgewählt aus Antioxidantien, Stabilisatoren, Farbstoffen, Dispersionshilfsmitteln.

4. Etikett nach einem der Ansprüche 1 bis 3, wobei das Etikett einlagig oder mehrlagig ist.

5. Etikett nach einem der Ansprüche 1 bis 4, wobei das Etikett mehrlagig ist und eine nicht schrumpfbare Folienlage enthält.

6. Etikett nach Anspruch 5, wobei die nicht schrumpfbare Folienlage Polyethylen oder Polypropylen enthält.

7. Etikett nach einem der Ansprüche 1 bis 6, wobei das Etikett mehrlagig ist und eine transparente äußere Folienlage enthält.

8. Etikett nach einem der Ansprüche 1 bis 7, das ferner eine Trennfolie enthält.

9. Etikett nach Anspruch 1, wobei das Etikett an einem Verbraucherprodukt angebracht ist.

10. Etikett nach Anspruch 9, wobei das Etikett an dem Verbraucherprodukt angebracht und auf das Verbraucherprodukt aufgeschrumpft ist.

11. Etikett nach einem der Ansprüche 9 oder 10, wobei das Verbraucherprodukt ein Behälter, eine Flasche, eine Tube oder eine Batterie ist.

12. Etikett nach Anspruch 11, wobei das Verbraucherprodukt eine Batterie ist, und das Etikett auf die Batterie aufgeschrumpft ist, so dass das Kopfende und das Fußende vom Etikett umschlossen sind.

13. Etikett nach Anspruch 11, wobei das Verbraucherprodukt eine flexible, zusammendrückbare Tube ist, die einen Körper und eine Schulter aufweist.

14. Etikett nach Anspruch 13, wobei das Etikett einen 360°-Volleinschlag bildet und wobei das Etikett auf die flexible, zusammendrückbare Tube warmgeschrumpft ist, so dass sich das Etikett über die Schulter der Tube erstreckt.

15. Etikett nach einem der Ansprüche 1 bis 14, wobei das Etikett bedruckt und zugeschnitten ist um sich einem Verbraucherprodukt anzupassen.

16. Etikett nach einem der Ansprüche 1 bis 15, wobei das Etikett mehrlagig ist und eine oder mehrere Folien des Etiketts mittels Koextrusion, Extrusionsbeschichtung oder Beschichtung hergestellt sind.

17. Etikett nach einem der Ansprüche 1 bis 16, wobei das Etikett mehrlagig ist und eine Lackschicht enthält.

## Revendications

1. Étiquette thermorétractable à base de polyéthylène à orientation unidirectionnelle comprenant un film de polyéthylène à orientation biaxiale et ensuite à orientation uniaxiale dans le sens machine, dans laquelle ledit film comprend entre 50 % en poids et 100 % en poids de polyéthylène, qui a un retrait dans le sens machine supérieur à 40 % entre 100 °C et 135 °C et inférieur à 5 % dans le sens travers, et le retrait dans le sens machine est inférieur à 5 % jusqu'à 80 °C et le retrait dans le sens travers est inférieur à 5 % jusqu'à 135 °C,
comprenant en outre un adhésif sensible à la pression qui est permanent une fois que l'étiquette est appliquée, a une force de cisaillement adhésive supérieure à 15,75 kg/m [400 g/pouce] et est stable jusqu'à 70 °C.

2. Étiquette selon la revendication 1, dans laquelle le polyéthylène comprend du Polyéthylène Haute Densité, du Polyéthylène Moyenne Densité, du Polyéthylène Basse Densité, du Polyéthylène Basse Densité Linéaire, du Polyéthylène Ultra Basse Densité ou du Polyéthylène Ultra Haute Densité, du Polyéthylène Haute Densité à Masse Moléculaire élevée, ou des mélanges d'homopolymères ou de copolymères de ceux-ci.

3. Étiquette selon les revendications 1 ou 2, comprenant en outre un ou plusieurs additifs qui améliorent les propriétés de traitement, les propriétés de retrait, les propriétés de traction ou les propriétés optiques, choisis parmi les antioxydants, les stabilisants, les colorants, les auxiliaires de dispersion.

4. Étiquette selon les revendications 1 à 3, ladite étiquette étant monocouche ou multicouche.

5. Étiquette selon les revendications 1 à 4, l'étiquette étant multicouche et comprenant une couche de film non rétractable.

6. Étiquette selon la revendication 5, dans laquelle la couche de film non rétractable comprend du polyéthylène ou du polypropylène.

7. Étiquette selon les revendications 1 à 6, l'étiquette étant multicouche et comprenant une couche de film externe transparent.

8. Étiquette selon les revendications 1 à 7, comprenant en outre une doublure détachable.

9. Étiquette selon la revendication 1, l'étiquette étant fixée à un produit de consommation.

10. Étiquette selon la revendication 9, l'étiquette étant fixée au produit de consommation et rétractée sur le produit de consommation.

11. Étiquette selon les revendications 9 ou 10, dans laquelle le produit de consommation est un récipient, une bouteille, un tube ou une batterie.

12. Étiquette selon la revendication 11, dans laquelle le produit de consommation est une batterie, et l'étiquette est thermorétractée sur la batterie de telle sorte que les extrémités supérieure et inférieure de la batterie sont enveloppées par l'étiquette.

13. Étiquette selon la revendication 11, dans laquelle le produit de consommation est un tube souple compressible comprenant un corps et un épaulement.

14. Étiquette selon la revendication 13, l'étiquette formant une enveloppe complète à 360° et l'étiquette étant thermorétractée sur le tube souple compressible de sorte que l'étiquette s'étende sur l'épaulement du tube.

15. Étiquette selon les revendications 1 à 14, l'étiquette étant imprimée et découpée pour se conformer à un produit de consommation.

16. Étiquette selon les revendications 1 à 15, l'étiquette étant multicouche et un ou plusieurs films de l'étiquette étant produits par coextrusion, revêtement par extrusion ou revêtement.

17. Étiquette selon les revendications 1 à 16, l'étiquette étant multicouche et comprenant une couche de vernis.
